# FASCICULE DE BREVET EUROPEEN

(11) **EP 0 389 317 B1**
(45) Date de publication et mention de la délivrance du brevet: **28.07.1993**
(21) Numéro de dépôt: 90400472.8
(22) Date de dépôt: 21.02.1990
(51) Int. Cl.: B65G 49/06, C03B 35/16

(54) **Positionnement d'une feuille de verre défilant sur un convoyeur**
Positionierung einer auf einem Förderer vorbeilaufenden Glasscheibe
Positioning of a glass sheet moving on a conveyor

(30) Priorité: 24.03.1989 FR 8903936
(43) Date de publication de la demande: 26.09.1990
(73) Titulaire: SAINT-GOBAIN VITRAGE INTERNATIONAL, 92400 Courbevoie (FR)
(72) Inventeur: Mathivat, Denis, F-60150 Thourotte (FR); Petitcollin, Jean-Marc, F-60150 Thourotte (FR)
(74) Mandataire: Menes, Catherine

(56) Documents cités:
- EP-A- 0 146 442
- EP-A- 0 267 120
- US-A- 3 992 182
- US-A- 4 015 968
- US-A- 4 632 688

## Description

L'invention concerne le positionnement d'une feuille de verre défilant sur un convoyeur, en particulier d'une feuille de verre chauffée au-delà de sa température de ramollissement en vue de son bombage et/ou d'un traitement thermique destiné à modifier certaines de ses caractéristiques mécaniques. L'invention s'applique notamment à la production de vitrages de véhicules automobiles.

Pour fournir une feuille de verre correcte, avec une bonne conformité du galbe et une qualité optique satisfaisant les exigences les plus grandes, il importe entre autres critères que la feuille de verre soit correctement positionnée avant d'être prise en charge par les outils de bombage et/ou de traitement thermique. Or une feuille de verre chauffée au-delà de sa température de ramollissement ne peut être tenue par des pinces ou autres organes de préhension, sauf à tolérer les marques que ces organes laissent obligatoirement. Par ailleurs, mettre la feuille de verre en place par rapport aux outils avant de la chauffer, c'est immobiliser ces outils pour une durée exceptionnellement longue, ce qui entraîne des coûts de production très grands.

Ces problèmes de marques de pinces et d'immobilisation des outils sont nettement minorés avec les procédés de bombage et/ou de traitement thermique dont la première étape, à savoir le réchauffage de la feuille de verre, s'effectue dans un four que les feuilles de verre traversent convoyées par exemple sur un lit de rouleaux. Toutefois, le problème du positionnement n'est pas pour autant réglé car les vitesses de défilement et les longueurs des fours sont telles que deux feuilles de verre successives n'ont pas toujours des trajectoires rigoureusement égales. Les écarts de trajectoires peuvent s'analyser en deux types de défauts : des glissements perpendiculairement à l'axe du convoyeur et des rotations par rapport à cet axe, défauts auxquels on remédie respectivement avec des dispositifs de positionnement latéral et avec des dispositifs de positionnement frontal.

Comme indiqué dans la demande de brevet EP-A-267 120, le positionnement latéral est par exemple obtenu au moyen de règles de guidage qui se resserrent au fur et à mesure que l'on progresse dans le sens d'avancement du convoyeur et qui limitent un passage pour la feuille de verre. Le verre frotte contre les règles, mais n'est pas stoppé par celles-ci.

Toutefois, comme les feuilles de verre destinées à des vitrages de véhicules automobiles ne sont jamais formées par des plaques rectangulaires mais présentent presque systématiquement une largeur qui varie d'un bout à l'autre du vitrage, ce positionnement latéral n'est pas suffisant et doit être complété par un positionnement frontal comportant selon EP-A-267 120 une phase d'arrêt de la feuille de verre. Pour faire acquérir à la feuille de verre l'orientation voulue, on place sur son chemin un butoir - constitué par exemple par deux butées - qui est nécessairement heurté par une extrémité du bord avant de la feuille et est maintenu en place un temps suffisant pour que le verre soit réorienté par le convoyeur continuant à entraîner la feuille de verre. Tant que le feuille de verre est au moins pour partie immobilisée par le butoir, elle frotte toujours au même endroit sur les rouleaux qui peuvent alors laissés une empreinte sur le verre qui en raison de sa température élevée est très facilement marqué. Le positionnement frontal constitue de ce fait la source de nombreux défauts optiques.

L'invention a pour but un nouveau mode de positionnement frontal d'une feuille de verre qui minimise les frottements du verre sur les rouleaux et par conséquence le risque de marquage.

Selon l'invention, on propose un procédé de positionnement d'une feuille de verre défilant sur un convoyeur selon lequel on interpose sur le chemin de la feuille de verre deux butées qui sont successivement heurtées par deux extrémités du bord avant de la feuille de verre qui continue d'être entraînée par le convoyeur, la feuille de verre étant correctement orientée lorsqu'elle est au contact des deux butées, la commande de l'escamotage simultané des deux butées s'effectuant immédiatement après l'enregistrement par des moyens de détection appropriés du contact entre la feuille de verre et les deux butées.

Le procédé selon l'invention exclut pratiquement toute temporisation de positionnement, la feuille de verre n'étant plus retenue que le temps réel nécessaire à son orientation - auquel vient seulement s'ajouter le temps de réponse du mécanisme d'escamotage - de sorte que pour chaque feuille de verre est minimisé le temps de frottement sur les rouleaux. Ce procédé de positionnement permet ainsi de garantir une qualité optique correcte, même si on observe de grands écarts d'orientation entre deux volumes successifs : on ne tient plus compte du pire - c'est-à-dire de la plus grande déviation observée - mais de la déviation effective d'une feuille donnée.

Dans la plupart des cas, le caractère aléatoire des déviations observées fait que l'une ou l'autre des butées peut être la première heurtée, aussi chaque butée sera de préférence équipée de moyens de détection du contact entre le verre et la butée.

De préférence, ces moyens de détection enregistrent indirectement la présence d'une extrémité de la feuille de verre par une mesure de l'impulsion communiquée à une butée par le choc du verre. On a ainsi une mesure purement mécanique qui est avantageusement totalement indépendante de la température de la feuille de verre ; de plus, cette impulsion peut être transmise sans aucun retard par un bras de levier jusqu'à une cellule de détection située hors de l'enceinte chaude dans laquelle est placé le convoyeur.

L'invention concerne également un dispositif pour la mise en oeuvre du procédé de positionnement proposé. Le dispositif de positionnement proposé est constitué de deux ensembles de positionnement identiques placés en regard l'un de l'autre, de chaque côté du convoyeur, chaque ensemble étant constitué d'un bras portant une butée, d'un détecteur du contact entre la feuille de verre et la butée et de moyens aptes à faire pivoter le bras pour escamoter la butée ; l'escamotage des deux butées étant commandé simultanément par un circuit comportant en série deux coupe-circuits correspondants respectivement à chaque détecteur associé à une butée.

Le bras portant une butée est de préférence lié par un manchon à crabot à un arbre de transmission dont la rotation est commandée par l'intermédiaire éventuellement d'un système bielle-manivelle, par des dispositifs très rapides du type électro-aimants ou commandes mécaniques à billes télésouples. Le crabot doit laisser un jeu suffisant entre l'arbre et le bras pour que ce dernier puisse répondre à la poussée exercée par la feuille de verre par un léger déplacement qui peut être détecté par exemple au moyen d'une cellule photoélectrique. Avantageusement, les systèmes de commande présentent des temps de réponse de l'ordre de 1/10 de seconde.

De préférence chaque ensemble de positionnement est monté sur un chariot mobile selon deux axes du plan formé par le convoyeur : un axe longitudinal, parallèle à l'axe du convoyeur, et selon un axe perpendiculaire au premier, et dans le plan du convoyeur le déplacement du chariot permettant à volonté de modifier la position des butées pour tenir compte des différentes formes et tailles des feuilles de verre.

Au dispositif de positionnement vient s'ajouter un compteur qui définit la durée de la phase d'attente pendant laquelle les butées sont escamotées de façon à laisser passer toute la longueur d'une feuille de verre et à abaisser les butées entre deux feuilles défilant sur le convoyeur.

Selon un perfectionnement de l'invention, les deux ensembles sont animés pendant toute la durée du positionnement d'un mouvement de translation selon l'axe longitudinal X, dans le sens de défilement des feuilles de verre et à une vitesse inférieure à la vitesse du convoyeur. Pour cela, les deux chariots sont déplacés au moyen d'un ou deux moteurs par exemple placés sous le convoyeur et qui les entraînent simultanément.

De la sorte, on minimise non seulement la durée du positionnement (qui est toutefois un peu plus longue que précédemment en raison de la fuite des butées devant la feuille de verre) mais aussi l'intensité du frottement, la feuille de verre chaude n'étant plus stoppée mais seulement freinée par l'une des butées.

Avantageusement, les deux ensembles sont mis en mouvement avant même que l'extrémité la plus avant de la feuille de verre ne heurte la première butée, de sorte que les butées ont atteint une vitesse de croisière constante lorsque débute à proprement dit le positionnement. Cette mise en mouvement, est de préférence déclenchée par la détection de l'arrivée d'une feuille de verre en amont, de préférence au moyen d'un barrage lumineux par exemple tel que celui connu de EP-A-267 850.

Si on choisit d'opérer en maintenant les butées mobiles au cours du positionnement, l'enregistrement du contact du verre avec les deux butées peut servir non à commander directement l'escamotage desdites butées mais dans un premier temps leur accélération simultanée en faisant en sorte qu'elles s'éloignent rapidement de la feuille de verre puis on fait pivoter les bras pour laisser la place à la feuille de verre qui poursuit son chemin. De cette façon, on évite tout risque de voir la feuille de verre se soulever légèrement du convoyeur en restant collée aux butées, phénomène parfois observé en raison de la température élevée de la feuille de verre.

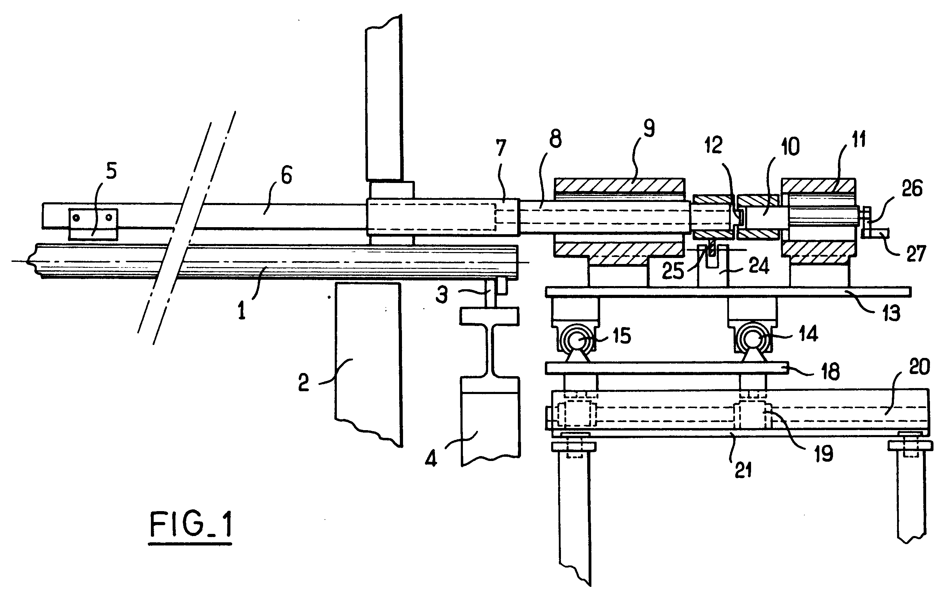

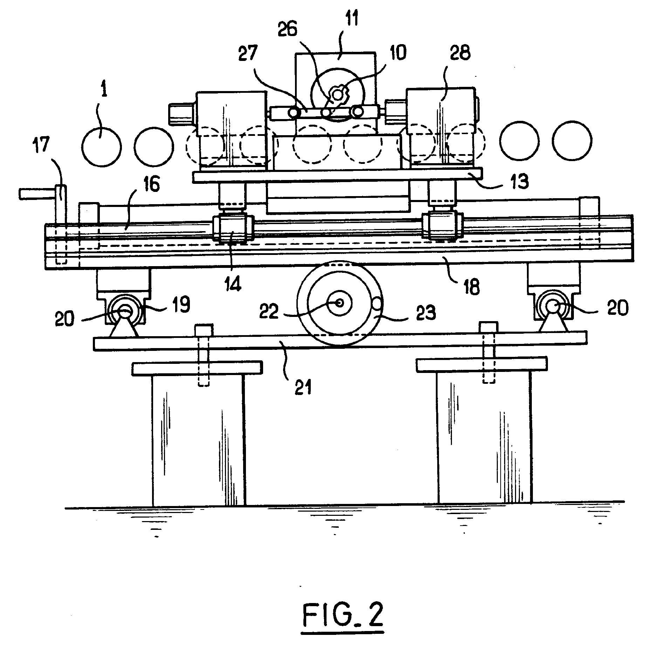

D'autres détails et caractéristiques avantageuses de l'invention ressortent de la description faite ci-après d'un mode de réalisation, en référence aux dessins annexés, qui représentent :
. **figure 1** : une vue perpendiculairement au plan du convoyeur d'un ensemble de positionnement,
. **figure 2** : une vue de côté de l'ensemble de positionnement de la figure 1.

Les figures 1 et 2 concernent un dispositif pour la mise en oeuvre de l'invention, conformément au premier mode de réalisation proposé. Ce dispositif de positionnement est monté au-dessus d'un convoyeur formé par un lit de rouleaux 1, de préférence constitués par des tubes creux en silice, entourés d'un tissu en fils de silice éventuellement et notamment dans la zone de positionnement enduit d'un produit facilitant le glissement des feuilles de verre du type lithopone ou encore nitrure de bore. Ces rouleaux 1 traversent une enceinte chaude délimitée latéralement par des parois 2 et tournant par exemple sur des galets 3 disposés sur un bâti 4 placés à l'extérieur de l'enceinte chaude.

Le positionnement des feuilles de verre véhiculées par les rouleaux 1 est obtenu par des butées 5 fixées aux extrémités de bras 6. On a choisit ici de représenter un ensemble avec des butées sur des bras montés au-dessus des rouleaux 1, mais il est aussi possible d'opérer avec des bras sous les rouleaux et des butées en saillie. Le bras 6 est formé par exemple d'un tube métallique. A son extrémité, sise hors de l'enceinte chaude, est fixée par un fourreau 7, une tige d'entraînement 8 guidée par un palier à roulement 9. A la suite de la tige d'entraînement 8 est placé un arbre 10 guidé dans un palier à roulement 11. La tige 8 et l'arbre 10 sont solidarisés par un crabot 12 avec entre les dents d'engrenage un petit jeu.

Les paliers à roulement 9 et 11 sont posés sur un chariot 13 qui peut être translaté sur des glissières 15, parallèles à l'axe X longitudinal du convoyeur, le long desquelles coulissent les paliers 14 solidaires du chariot 13. Le déplacement du chariot est obtenu au moyen d'une vis sans fin 16 mue par une manivelle 17 visibles seulement à la figure 2. Les glissières 15 et la vis 16 sont de même supportées par une table 18 qui se déplace selon un axe Y perpendiculaire à l'axe X, grâce à des paliers 19 solidaires de la table 18 et mobiles le long de glissières 20 fixées à un banc 21 solidaire du bâti général. La position de la table 18 est réglée par une vis sans fin 22 mue par une manivelle 23.

Les vis sans fin 16 et 22 permettent de régler très précisément la position des butées longitudinalement et transversalement, en correspondance avec les différentes tailles et formes de feuilles de verre.

Comme indiqué précédemment, le bras 6 et sa tige 8 d'entraînement sont montés dans un palier à roulement de préférence pratiquement sans frottement, de sorte qu'une petite pression exercée sur la butée 5 par la feuille de verre suffit à entraîner un début de rotation de la tige 8 et donc de l'ergot 25, ce qui désocculte la cellule 24. Cette première rotation est d'un angle très faible et correspond au maximum au jeu des dents d'engrenage du crabot.

Par ailleurs, l'arbre 10 est manoeuvrable par une manivelle 26 articulée à une bielle 27 translatée sous l'action d'électro-aimants 28. Le circuit d'alimentation de ces électro-aimants comporte deux coupe-circuits en série, chaque coupe-circuit est associé à l'une des deux cellules de l'ensemble de positionnement de sorte que le circuit d'alimentation est fermé quand les deux cellules sont désoccultées, ce qui signifie que les deux butées sont en contact avec la feuille de verre.

Le système fonctionne de la façon suivante : une première extrémité du bord avant de la feuille de verre vient heurter la butée 5 sous l'impulsion reçue ce qui fait tourner le bras 6, la tige associée 8 et donc l'ergot 25. Une des deux cellules 24 n'est plus occultée ce qui ferme un des coupe-circuits. La butée 5 reste toutefois en place et retient la feuille de verre qui continue à être entraînée par le convoyeur de sorte qu'après un certain temps dépendant de la dérive initiale de position de la feuille de verre, la seconde butée est à son tour heurtée ce qui de même entraîne la fermeture du coupe-circuit correspondant. Le circuit d'alimentation est alors fermé et les électro-aimants font se déplacer la bielle 26, ce qui, via la manivelle 25, fait tourner l'arbre 11 par exemple d'un demi-tour. Le temps de réponse complet du système après la désoccultation des deux cellules est de l'ordre de 1/10 de seconde.

La rotation de l'arbre 11 entraîne celle de la tige 8 qui lui est accouplée par le crabot 12 et donc finalement l'escamotage des butées.

Dans le cas où les butées sont déplacées parallèlement à l'axe du convoyeur pendant toute la durée du positionnement, le dispositif comporte en outre un moteur qui au moyen de courroies transmet son mouvement à des vis sans fin ou des vérins à vis associés à chacun des bancs 21.

Dans ce cas, le banc est déplacé à une vitesse V2 inférieure à la vitesse V1 du convoyeur - et dans le même sens que celui-ci - de sorte que la feuille de verre entraînée par le convoyeur soit en mesure de rattraper une première butée puis la seconde butée, le contact du verre avec la seconde entraînant comme précédemment l'escamotage simultané des deux butées. De préférence, les bancs sont ramenés en position de départ à vitesse élevée, butées hautes pour le positionnement de la feuille de verre suivante.

Un dispositif de positionnement selon l'invention peut être utilisé dans tout type d'installation de traitement de feuilles de verre chaudes, notamment dans les installations de bombage conformes aux enseignements FR-A-2 549 465, FR-A-2 604 992, FR 2 085 464, FR-A-2 567 508, FR-A 2 596 551 ou FR-A 2 596 550.

## Revendications

1. Procédé de positionnement d'une feuille de verre défilant sur un convoyeur selon lequel on interpose sur le chemin de la feuille de verre deux butées qui sont successivement heurtées par deux extrémités du bord avant de la feuille de verre qui continue d'être entraînée par le convoyeur, la feuille de verre étant correctement orientée lorsqu'elle est au contact des deux butées, **caractérisé en ce que** la commande de l'escamotage simultané des deux butées s'effectue immédiatement après l'enregistrement du contact du verre avec les deux butées.

2. Procédé de positionnement selon la revendication 1, **caractérisé en ce que** l'on enregistre de façon indépendante le contact du verre avec chacune des butées, le second enregistrement au cours du temps entraînant la fermeture du circuit de commande du mécanisme d'escamotage.

3. Procédé de positionnement selon la revendication 2, **caractérisé en ce que** chaque butée fait partie d'un ensemble de positionnement mobile selon deux axes du plan formé par le convoyeur, un axe X longitudinal, parallèle à l'axe du convoyeur et un axe Y perpendiculaire au premier.

4. Procédé se positionnement selon la revendication 3, **caractérisé en ce que** pendant toute la durée du positionnement, les ensembles de positionnement sont animés de mouvements de translation selon l'axe longitudinal, dans le sens de défilement des feuilles de verre, à une vitesse inférieure à la vitesse du convoyeur.

5. Procédé de positionnement selon la revendication 4; **caractérisé en ce que** le mouvement des ensembles de positionnement débute avant qu'une des extrémités du bord avant de la feuille de verre ne heurte la première butée.

6. Procédé de positionnement selon la revendication 4 ou 5, **caractérisé en ce qu'**en fin de positionnement, la mise hors jeu des butées est obtenue par une accélération avant l'escamotage.

7. Procédé de positionnement selon l'une des revendications 4 à 6, **caractérisé** en ce **que** le déplacement des ensembles de positionnement est commandé par la détection en amont de l'arrivée d'une feuille de verre défilant sur le convoyeur.

8. Procédé de positionnement selon l'une des revendications précédentes, **caractérisé en** ce qu'on enregistre le contact du verre avec une butée par une mesure de l'impulsion communiquée à ladite butée par la feuille de verre.

9. Dispositif de positionnement constitué de deux ensembles de positionnement identiques placés en regard l'un de l'autre, de chaque côté du convoyeur, chaque ensemble étant constitué d'un bras (6) portant une butée (5) , d'un détecteur (24) du contact de la feuille de verre avec la butée (5) et de moyens aptes à faire pivoter le bras (6) pour escamoter la butée ; l'escamotage des deux butées étant commandé simultanément par un circuit comportant en série deux coupe-circuits correspondant chacun à un détecteur associé à une butée (5).

10. Dispositif de positionnement selon la revendication 9 **caractérisé en ce que** le bras est porté par un chariot mobile (13) selon deux axes X et Y perpendiculaires

11. Dispositif de positionnement selon la revendication 9 ou la revendication 10 **caractérisé en ce que** le mouvement de la butée (5) dû au heurt par une feuille de verre est enregistré par une cellule photoélectrique (24) occultée par un ergot (25) solidaire du bras (6) en position d'attente, et désoccultée lorsque la butée est heurtée.

12. Dispositif de positionnement selon l'une des revendications 9 à 11 **caractérisé** en ce que la rotation du bras (6) pour l'escamotage simultané des butées (5) est obtenue par la rotation d'un arbre (11) auquel il est accouplé par un crabot (12), l'arbre (11) étant entraîné en rotation par une manivelle (26) mue par une bielle (27) déplacée par deux électro-aimants (28) dont le circuit d'alimentation est fermé lorsque les deux butées (5) ont été heurtées.

13. Dispositif de positionnement selon l'une des revendications 9 à 12, **caractérisé** en ce que le chariot mobile (13) est monté sur un banc (21) déplaçable parallèlement à l'axe du convoyeur pendant le positionnement.

14. Procédé de positionnement selon l'une des revendications 4 à 8, **caractérisé en ce que** le frottement du verre contre les rouleaux (1) du convoyeur est minimisé par imprégnation d'un agent de glissement du type lithopone ou nitrure de bore.

15. Application du dispositif selon l'une des revendications 9 à 13 à une installation de bombage de feuilles de verre.

## Patentansprüche

1. Verfahren zur Positionierung einer auf einer Fördereinrichtung transportierten Glasscheibe, bei dem auf dem Weg der Glasscheibe zwei Anschlagteile zwischengeschaltet werden, an die nacheinander zwei Enden der vorderen Kante der Glasscheibe stoßen, die weiterhin von der Fördereinrichtung mitgenommen wird, wobei die Glasscheibe genau ausgerichtet wird, wenn sie mit den zwei Anschlagteilen in Kontakt ist,
**dadurch gekennzeichnet, daß** das gleichzeitige Einziehen der zwei Anschlagteile sofort nach Registrierung des Kontakts des Glases mit den zwei Anschlagteilen stattfindet.

2. Verfahren zur Positionierung nach Anspruch 1, **dadurch gekennzeichnet, daß** der Kontakt des Glases mit jedem der Anschlagteile unabhängig registriert wird, wobei die zeitlich zweite Registrierung die Schließung des Steuerkreises des Einzieh-Mechanismus bewirkt.

3. Verfahren zur Positionierung nach Anspruch 2, **dadurch gekennzeichnet, daß** jedes Anschlagteil Teil eines Positionierungssystems ist, das entlang zweier Achsen der durch die Fördereinrichtung gebildeten Ebene beweglich ist, nämlich einer zur Achse der Fördereinrichtung parallelen Längsachse X und einer zu dieser senkrechten Achse Y.

4. Verfahren zur Positionierung nach Anspruch 3, **dadurch gekennzeichnet, daß** während der gesamten Positionierungsdauer die Positionierungssysteme Translationsbewegungen entlang der Längsachse in Transportrichtung der Glasscheiben ausführen, mit einer Geschwindigkeit, die niedriger ist als die Geschwindigkeit der Fördereinrichtung.

5. Verfahren zur Positionierung nach Anspruch 4, **dadurch gekennzeichnet, daß** die Bewegung der Positionierungssysteme beginnt, bevor eines der Enden der vorderen Kante der Glasscheibe an das erste Anschlagteil stößt.

6. Verfahren zur Positionierung nach Anspruch 4 oder 5, **dadurch gekennzeichnet, daß** am Ende der Positionierung das Außerkraftsetzen der Anschlagteile durch eine Beschleunigung vor dem Einziehen erreicht wird.

7. Verfahren zur Positionierung nach einem der Ansprüche 4 bis 6, **dadurch gekennzeichnet, daß** die Verschiebung der Positionierungssysteme durch die Erfassung stromaufwärts der Ankunft einer auf der Fördereinrichtung transportierten Glasscheibe gesteuert wird.

8. Verfahren zur Positionierung nach einem der vorhergehenden Ansprüche, **dadurch gekennzeichnet, daß** der Kontakt des Glases mit einem Anschlagteil durch Messung des durch die Glasscheibe auf das Anschlagteil ausgeübten Impulses registriert wird.

9. Positioniervorrichtung aus zwei identischen Positionierungssystemen, die einander gegenüberliegend an beiden Seiten der Fördereinrichtung angeordnet sind, wobei jedes System einen ein Anschlagteil (5) tragenden Arm (6), einen Detektor (24) für den Kontakt der Glasscheibe mit dem Anschlagteil (5) und eine Einrichtung zum Schwenken des Arms (6) zum Einziehen des Anschlagteils aufweist; wobei das Einziehen der zwei Anschlagteile gleichzeitig von einem Schaltkreis mit zwei in Reihe geschalteten Unterbrechern gesteuert wird, von denen jeder einem an ein Anschlagteil (5) angeschlossenen Detektor entspricht.

10. Positioniervorrichtung nach Anspruch 9, **dadurch** **gekennzeichnet, daß** der Arm von einem beweglichen Schlitten (13) entlang zweier Achsen X und Y getragen wird.

11. Positioniervorrichtung nach Anspruch 9 oder 10, **dadurch gekennzeichnet, daß** die durch das Anstoßen einer Glasscheibe verursachte Bewegung des Anschlagteils (5) durch eine Photozelle (24) registriert wird, die in der Warteposition durch einen mit dem Arm (6) fest verbundenen Nocken (25) verdunkelt wird und durch das Anstoßen an den Anschlag erhellt wird.

12. Positioniervorrichtung nach einem der Ansprüche 9 bis 11, **dadurch gekennzeichnet, daß** die Drehung des Armes (6) für das gleichzeitige Einziehen der Anschlagteile (5) durch die Drehung einer Welle (11) erfolgt, an die er mittels einer Kupplung (12) angekuppelt ist, wobei die Welle (11) durch eine durch ein Pleuel (27) bewegte Kurbel (26) in Drehung versetzt wird, wobei das Pleuel durch zwei Elektromagneten (28) verschoben wird, deren Speisestromkreis nach dem Anstoßen an die zwei Anschlagteile (5) geschlossen wird.

13. Positioniervorrichtung nach einem der Ansprüche 9 bis 12, **dadurch gekennzeichnet, daß** der bewegliche Schlitten (13) auf einem während der Positionierung parallel zur Achse der Fördereinrichtung verschiebbaren Bett (21) angebracht ist.

14. Verfahren zur Positionierung nach einem der Ansprüche 4 bis 8, **dadurch gekennzeichnet, daß** die Reibung des Glases auf den Rollen (1) der Fördereinrichtung durch Imprägnierung mit einem Gleitmittel wie Lithopone oder Bornitrid minimiert wird.

15. Verwendung der Vorrichtung nach einem der Ansprüche 9 bis 13 für eine Biegeanlage für Glasscheiben.

## Claims

1. Method of positioning a glass sheet travelling on a conveyor, according to which two stops are interposed on the path of the glass sheet, which stops are successively struck by two ends of the front edge of the glass sheet, which continues to be driven by the conveyor, the glass sheet being correctly orientated while it is in contact with the two stops, characterized in that the instruction for the simultaneous retraction of the two stops takes place immediately after the recording of the contact between the glass and the two stops.

2. Method of positioning according to Claim 1, characterized in that the contact between the glass and each of the stops is recorded independently, the second recording during the period leading to the closure of the control circuit for the retracting mechanism.

3. Method of positioning according to Claim 2, characterized in that each stop forms part of a positioning assembly movable along two axes of the plane formed by the conveyor, a longitudinal X-axis parallel to the axis of the conveyor and a Y-axis perpendicular to the former.

4. Method of positioning according to Claim 3, characterized in that throughout the duration of the positioning, the positioning assemblies are subject to translatory movements along the longitudinal axis in the direction of travel of the glass sheets, at a speed lower than that of the conveyor.

5. Method of positioning according to Claim 4, characterized in that the movement of the positioning assemblies commences before one of the ends of the front edge of the glass sheet strikes the first stop.

6. Method of positioning according to Claim 4 or 5, characterized in that, on completion of positioning, the taking of the stops out of action is achieved by an acceleration before the retraction.

7. Method of positioning according to one of Claims 4 to 6, characterized in that the displacement of the positioning assemblies is controlled by the upstream detection of the arrival of a glass sheet travelling on the conveyor.

8. Method of positioning according to one of the preceding Claims, characterized in that the contact between the glass and one stop is recorded by a measurement of the impulse communicated to said stop by the glass sheet.

9. Positioning device constituted of two identical positioning assemblies situated opposite each other, on either side of the conveyor, each assembly being constituted of an arm (6) carrying a stop (5), of a detector (24) of the contact between the glass sheet and the stop (5) and of means adapted for causing the arm (6) to pivot in order to retract the stop; the retraction of the two stops being simultaneously instructed by a circuit comprising, in series, two short-circuits each corresponding to a detector associated with a stop (5).

10. Positioning device according to Claim 9, characterized in that the arm is carried by a carriage (13) movable along two mutually perpendicular axes X and Y.

11. Positioning device according to Claim 9 or Claim 10, characterized in that the movement of the stop (5) resulting from the contact by a glass sheet is recorded by a photoelectric cell (24), occulted by a lug (25) integral with the arm (6) in a waiting position and exposed when the stop is struck.

12. Positioning device according to one of Claims 9 to 11, characterized in that the rotation of the arm (6) for the simultaneous retraction of the stops (5) is achieved by the rotation of a shaft (11), to which it is coupled by a dog clutch (12), the shaft (11) being rotationally driven by a crank (26) moved by a connecting rod (27) displaced by two electromagnets (28), the supply circuit to which is closed when the two stops (5) have been struck.

13. Positioning device according to one of Claims 9 to 12, characterized in that the movable carriage (13) is mounted on a bench (21) displaceable parallel to the axis of the conveyor during the positioning.

14. Method of positioning according to one of Claims 4 to 8, characterized in that the friction of the glass on the rollers (1) of the conveyor is minimized by impregnation with a sliding agent of the lithopone or boron nitride type.

15. Application of the device according to one of Claims 9 to 13 to an installation for bending glass sheets.
